# EUROPEAN PATENT APPLICATION

(11) **EP 1 486 816 A1**
(43) Date of publication of application: **15.12.2004**
(21) Application number: 04102517.2
(22) Date of filing: 04.06.2004
(51) Int. Cl.: G02B 27/00

(54) **Method and apparatus for reducing contamination in a grating light valve imaging system.**

(30) Priority: 11.06.2003 US 459348
(71) Applicant: Agfa Corporation, Ridgefield Park, NJ 07660-2199 (US)
(72) Inventor: Kraicer, Leonard, MA01824, Chelmsford (US); Knox, Jeffrey, MA01940, Lynnfield (US)
(74) Representative: De Niel, Marc Alfons Jozef

(57) **Abstract**

A method and apparatus for reducing contamination on the protective lids of a grating light valve (GLV) and a calibration sensor (300) in an imaging system (10). A shroud (102) surrounds the protective lid (306) of the GLV/sensor. An airflow system (104) inputs a stream of air into the shroud (102), and the shroud (102) directs the stream of air away from the GLV/sensor. A pellicle (200) may also be used to enclose the GLV/sensor to prevent contamination of the protective lid (306).

## Description

### FIELD OF THE INVENTION

The present invention relates to a method for reducing on a protective lid of a component.More specifically the invention is related to a Grating Light Valve™ (GLV) system.

### BACKGROUND OF THE INVENTION

In external drum imaging systems, a movable optical carriage is commonly used to displace an image recording source in a slow scan direction while a cylindrical drum, having recording media mounted on an external surface thereof, is rotated with respect to the image recording source. The drum rotation causes the recording media to advance past the image recording source along a fast scan direction that is substantially perpendicular to the slow scan direction.

The image recording source may include an optical system for generating at least one writing beam that is scanned across the surface of the recording media. Each writing beam may be separately modulated according to a digital information signal representing the image to be recorded. For example, one or more laser sources may be configured (e.g., in a line illumination module) to provide a single line of laser light that is coupled to a modulating device such as a Grating Light Valve™ (GLV), available from Silicon Light Machines, Inc. of Sunnyvale, California. The GLV includes an array of micro-shutters for modulating the line of laser light to produce a plurality of individually addressable writing beams.

Calibration of the micro-shutters of the GLV is accomplished using a calibration sensor that measures beam intensity. The calibration sensor can be located, for example, at the end of the drum. The calibration sensor includes a protective lid, such as a transparent lid formed of glass or other suitable material, and a precise aperture slit that allows laser energy onto the sensor surface. The protective cover and slit must stay free of contamination to prevent improper calibration of the GLV.

The array of micro-shutters in the GLV are also covered by a protective lid, such as a transparent lid formed of glass or other suitable material. During operation of an imaging system that includes a GLV, it has been found that particles are being deposited on the surface of the protective lid covering the micro-shutters of the GLV, thereby degrading image quality to unacceptable levels. Laboratory experiments have proven that the contamination on the surface of the protective lid covering the micro-shutters of the GLV is primarily due to particles that, in one way or another, move into the path of the laser light that is directed toward the GLV by the laser source(s). It is believed that these particles are directed toward the laser focus due to an "optical tweezer" phenomenon. This optical effect is due to refractive forces acting on a given particle. The summation of all forces acting on the particle always results in a force vector toward focus, and deposition of the particle on the surface of the protective lid covering the micro-shutters of the GLV. Although the forces acting on the particle are very small (e.g., on order of pico-newtons), they are sufficient to direct the particle toward and onto the protective lid covering the micro-shutters of the GLV. In a similar manner, particles are directed toward and onto the protective lid of the GLV calibration sensor.

Accordingly, there is a need for a method and apparatus for preventing or reducing particle contamination on the surface of the protective lid covering the micro-shutters of the GLV. In addition, there is a need for a method and apparatus for preventing or reducing particle contamination on the surface of the protective lid covering the GLV calibration sensor.

### SUMMARY OF THE INVENTION

The above-mentioned problems are solved by a method and having the specific features set out in claim 1 and a apparatus according to claim 9. Specific features for preferred embodiments of the invention are set out in the dependent claims.

Generally, the present invention provides a method for reducing contamination on a protective lid of a component of a grating light valve (GLV) system, comprising: surrounding the protective lid of the GLV component with a shroud; and inputting a stream of air into the shroud.

The present invention also provides an apparatus for reducing contamination on a protective lid of a grating light valve (GLV) component, comprising: a shroud surrounding the protective lid of the GLV component; and an airflow system for inputting a stream of air into the shroud.

The present invention further provides an apparatus for reducing contamination on a protective lid of a grating light valve (GLV) component, comprising: a shroud surrounding the protective lid of the GLV component, wherein the GLV component is selected from the group consisting of a GLV and a calibration sensor.

The present invention additionally provides a method for reducing contamination on a protective lid of a grating light valve (GLV) component, comprising: directing a stream of air away from the protective lid of the GLV component, wherein the GLV component is selected from the group consisting of a GLV and a calibration sensor.

The present invention further provides an imaging system comprising: a media support surface for supporting a printing plate; a system for recording image data onto the printing plate, wherein the system for recording includes a grating light valve (GLV) system; and a system for reducing contamination on a protective lid of a component of the GLV system, including a shroud surrounding the protective lid of the GLV component, and an airflow system for inputting a stream of air into the shroud.

The present invention also provides method for reducing contamination on a protective lid of a component of a grating light valve (GLV) system, comprising: enclosing the protective lid of the GLV component within a pellicle.

The present invention additionally provides an apparatus for reducing contamination on a protective lid of a component of a grating light valve (GLV) system, comprising: a pellicle for enclosing the protective lid of the GLV component.

The present invention also provides an imaging system comprising: a media support surface for supporting a printing plate; a system for recording image data onto the printing plate, wherein the system for recording includes a grating light valve (GLV) system; and a system for reducing contamination on a protective lid of a component of the GLV system, including a pellicle for enclosing the protective lid of the GLV component.

Further advantages and embodiments of the present invention will become apparent from the following description and drawings.

### BRIEF DESCRIPTION OF THE DRAWINGS

The features of the present invention will best be understood from a detailed description of the invention and embodiments thereof selected for the purpose of illustration and shown in the accompanying drawings in which:
FIG. 1 illustrates an external drum imaging system for recording images onto a printing plate.
FIG. 2 illustrates a GLV-based scanning system for use in the external drum imaging system of FIG. 1.
FIG. 3 illustrates the GLV-based scanning system of FIG. 2 mounted on the movable carriage of the external drum imaging system of FIG. 1.
FIG. 4 illustrates contamination on the surface of a protective lid of a GLV unit.
FIG. 5 illustrates an air curtain system in accordance with an embodiment of the present invention.
FIG. 6 illustrates a pellicle system in accordance with another embodiment of the present invention.
FIG. 7 illustrates a GLV calibration sensor.

### DETAILED DESCRIPTION OF THE INVENTION

The features of the present invention are illustrated in detail in the accompanying drawings, wherein like reference numerals refer to like elements throughout the drawings. Although the drawings are intended to illustrate the present invention, the drawings are not necessarily drawn to scale.

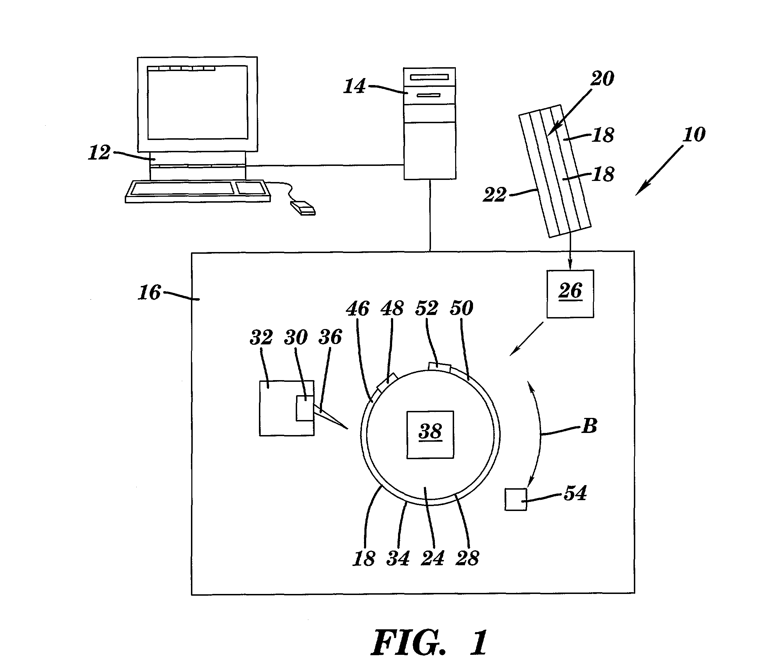

An example of an external drum imaging system 10 is illustrated in FIG. 1. In this example, the imaging system 10 comprises an external drum platesetter configured to record digital data onto a printing plate 18. Although described below with regard to an external drum platesetter, the method and apparatus of the present invention may be used in conjunction with a wide variety of other types of external drum, internal drum, or flatbed imaging systems, including imagesetters and the like, without departing from the intended scope of the present invention. In its broadest sense, the method and apparatus of the present invention may be employed in any type of application where it is desirable to reduce contamination on a protective lid covering a contamination-sensitive device.

The imaging system 10 includes a front end computer or workstation 12 for the design, layout, editing, and/or processing of digital files representing pages to be printed. In addition, the imaging system includes a raster image processor (RIP) 14 for processing the digital pages to provide rasterized page data (e.g., rasterized digital files) for driving an image recorder, and an image recorder or engine, such as an external drum platesetter 16, for recording the rasterized digital files onto a printing plate 18. A stack 20 of printing plates 18 is commonly supplied in a cassette 22. A printing plate 18 is picked off of the stack 20 and subsequently mounted on an external drum 24 of the external drum platesetter 16 by an autoloading system 26. A plate manager (not shown) may be used to automatically and selectively unload and feed a printing plate from a plurality of different cassettes to the external drum imaging system for imaging.

The external drum platesetter 16 includes an external drum 24 having a cylindrical media support surface 28 for supporting a printing plate 18 during imaging. The external drum platesetter 16 further includes a scanning system 30, coupled to a movable carriage 32, for recording digital data onto the imaging surface 34 of the printing plate 18 using a swath of writing beams 36 produced using a GLV.

The external drum 24 is rotated by a drive system 38 in a clockwise or counterclockwise direction as indicated by directional arrow B in FIG. 1. Typically, the drive system 38 rotates the external drum 24 at a rate of about 100-1000 rpm.

The leading edge 46 of the printing plate 18 is held in position against the media support surface 28 of the external drum 24 by a leading edge clamping mechanism 48. Similarly, the trailing edge 50 of the printing plate 18 is held in position against the media support surface 28 of the external drum 24 by a trailing edge clamping mechanism 52. A vacuum source 54 may be used to draw a vacuum through an arrangement of ports and vacuum grooves (not shown) to hold the printing plate 18 against the media support surface 28 of the external drum 24. The vacuum source 54 may also supply a vacuum to the autoloading system 26 that is configured to remove or "pick" the top printing plate 18 from the stack 20 of printing plates. A registration system comprising, for example, a set of registration pins on the external drum 24, and a plate edge detection system (not shown), may be used to accurately and repeatably position and locate each printing plate 18 on the external drum 24.

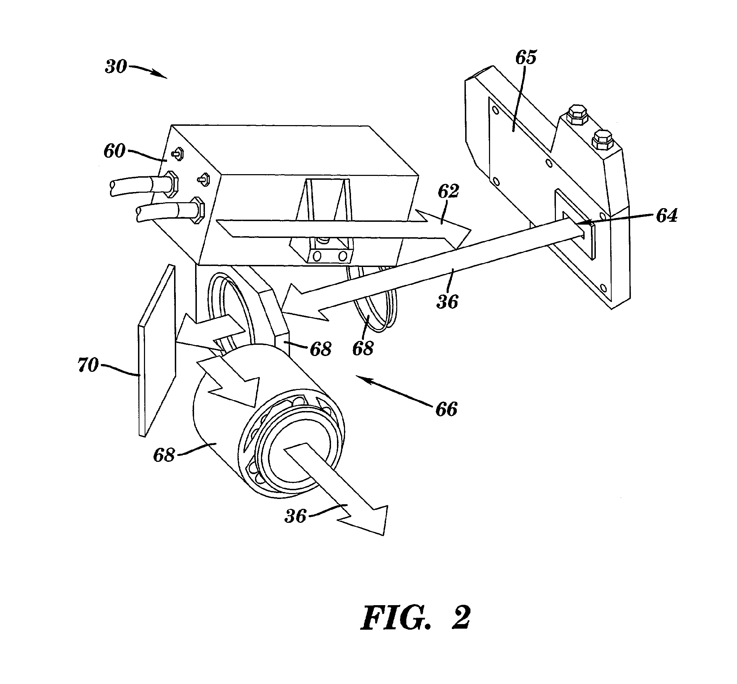

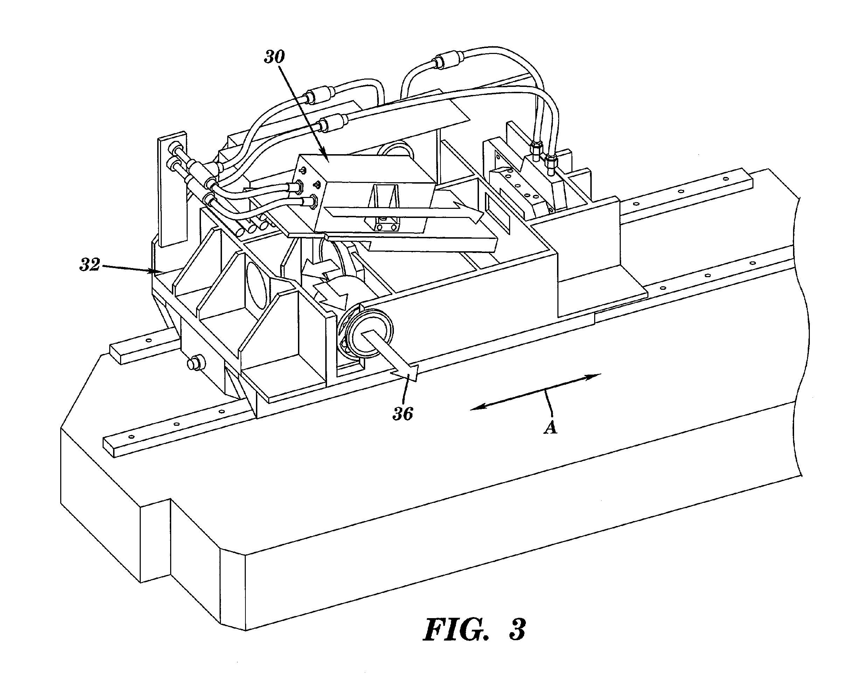

An example of a GLV-based scanning system 30 is illustrated in FIGS. 2 and 3. The scanning system 30 is displaced by a movable carriage 32 in a slow scan axial direction (directional arrow A) along the length of the rotating external drum 24 (FIG. 1) to expose the printing plate 18 in section-wise manner using a swath of writing beams 36. The scanning system 30 includes a line illumination module 60 for generating a line of laser light 62. The laser light 62 is directed toward a GLV unit 64 which produces a swatch of individually addressable writing beams 36. The GLV unit 64 is typically provided on a circuit board 65. An optical system 66 focuses the swath of writing beams 36 onto the printing plate 18.

As known in the art, the optical system 66 may include lenses 68, mirror 70, and/or other optical components.

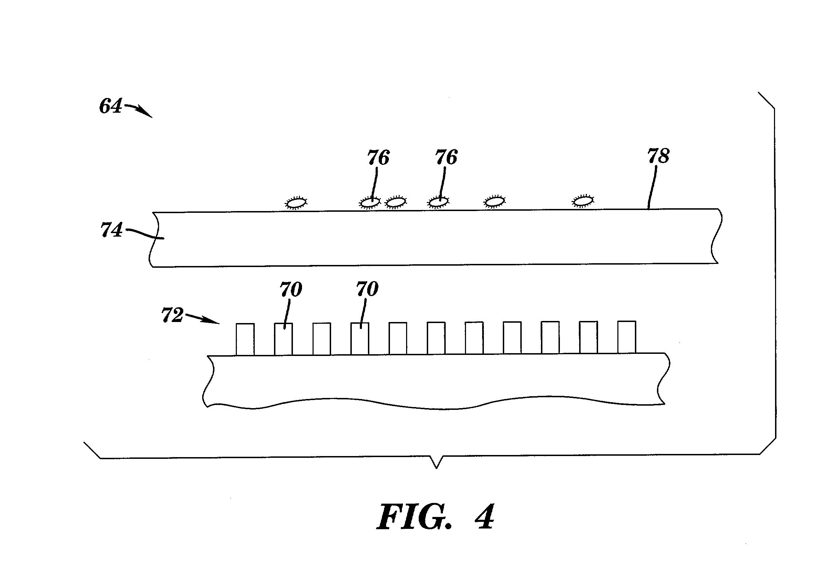

As shown in FIG. 4, the GLV unit 64 generally includes a plurality of micro-shutters 70 arranged in an array 72. The array 72 of micro-shutters are disposed behind a protective lid 74, such as a transparent lid formed of glass or other suitable material. During operation of the imaging system 10 (FIG. 1), particles 76 are deposited onto the surface 78 of the protective lid 74, resulting in a degradation in image quality.

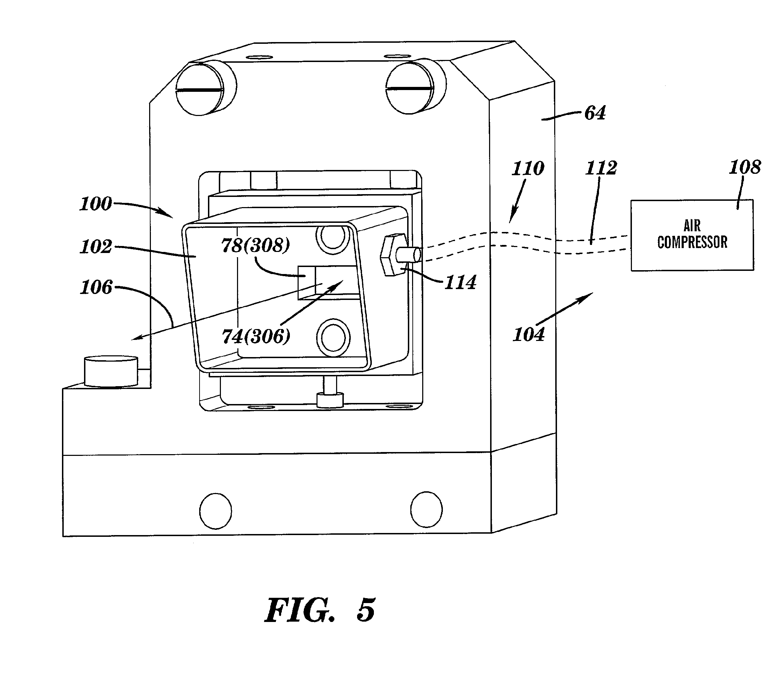

A first embodiment of the present invention, as shown in FIG. 5, provides an air curtain 100 for reducing the build-up of particles on the surface 78 of the protective lid 74 of the GLV unit 64. This results in increased image quality of the imaging system 10 (FIG. 1). The air curtain 100 comprises a shroud 102 mounted around the protective lid 74 of the GLV unit 64, and an air flow system 104 for porting air to the shroud 102. Experimentation has shown that the present invention is capable of reducing contamination on the surface 78 of the protective lid 74 of the GLV unit 64 by at least a factor of 10:1.

The shroud 102 surrounds the protective lid 74 of the GLV unit 64, and provides a channel for directing a stream of air, provided by the airflow system 104, away from the protective lid 74 of the GLV unit 64. The direction of airflow in FIG. 5 is indicated by directional arrow 106. In particular, air is directed out of the shroud in a direction substantially parallel to the axis of the laser light 62 projected at the GLV unit 64 by the line illumination module 60 (FIG. 2). The airflow counteracts the optical forces that are directing particles toward and onto the surface 78 of the protective lid 74 of the GLV unit 64, thereby preventing the particles from contaminating the surface 78. The shroud 102 also provides natural cover to minimize particle build-up on the surface 78 of the protective lid 74 of the GLV unit 64.

In addition to the functions described above, the shroud 102 also prevents particles from being dragged in behind the airflow from outside the shroud 102 (i.e., as a result of a venturi effect). A seal (not shown) may be provided at the interface between the shroud 102 and the GLV unit 64 to prevent air from entering the shroud 102 through this interface. Additionally, if required, suitable sealing (not shown) may be provided around the protective lid 74 and/other components of the GLV unit 64 to prevent air from entering the shroud via the GLV unit 64.

The airflow system 104 comprises an air compressor 108 and a coupling system 110 for supplying a stream of air to the shroud 102. Because the optical forces acting on the particles are on the order of pico-newtons, only a small airflow is necessary. As such, a low pressure air compressor 108 can be used in the practice of the present invention to provide the small airflow. The small airflow also ensures that the introduction of air into the path of the laser light 62 will not negatively affect the optical performance of the GLV-based scanning system 30.

The coupling system 110 includes tubing 112 and corresponding fittings 114 (only one is shown for clarity). The coupling system 110 is configured to introduce an air stream immediately adjacent the interface between the shroud 102 and the GLV unit 64 to ensure that the airflow will be directed outward along directional arrow 106 (i.e., away from the surface 78 of the protective lid 74 of the GLV unit 64.

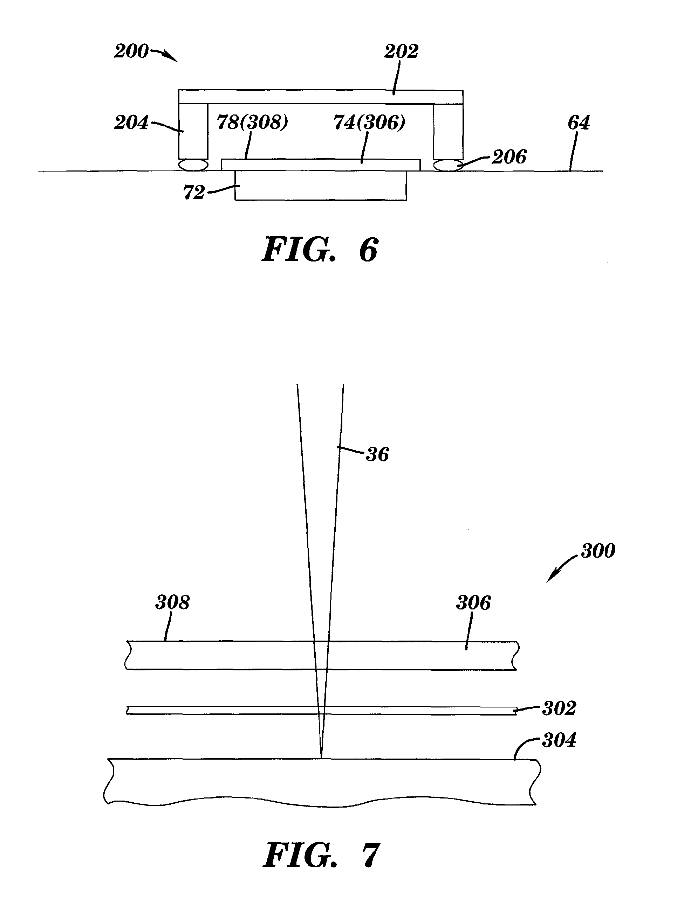

A second embodiment of the present invention is illustrated in FIG. 6. In this embodiment, a pellicle 200 is removably attached over the protective lid 74. The pellicle 200 is composed of a thin (e.g., 1 µm) transparent membrane or plate 202 (hereafter referred to collectively as a "membrane") adhered to a metal frame 204 which seals off the protective lid 74 of the GLV unit 64 from harmful particle contamination. The pellicle membrane can be formed of nitrocellulose or any other suitable material. The pellicle 200 is removably attached over the protective lid 74 by an adhesive layer 206, and the pellicle membrane 202 is held at a fixed distance from the surface 78 of the protective lid 74 by the frame 204. The pellicle membrane 202 is positioned by the frame 204 such that any particles that are deposited on the pellicle membrane 202 are located out of the image plane (i.e., out of focus) of the scanning system 30. As such, during imaging, any particle contamination on the pellicle membrane 202 will not be re-imaged on the printing plate 18 (FIG. 1). Because the pellicle membrane 202 is so thin, it generally cannot be cleaned to remove particle contamination. The pellicle 200, however, can easily be removed (e.g., peeled off) from the GLV unit 64 and replaced with a new, uncontaminated pellicle 200 when the pellicle membrane 202 because sufficiently contaminated.

A GLV calibration sensor 300 is shown in FIG. 7. The GLV calibration sensor 300 generally includes a slit aperture 302 and sensor 304 disposed behind a protective lid 306, such as a transparent lid formed of glass or other suitable material. During calibration of the imaging system 10 (FIG. 1), the writing beams 36 are projected at the GLV calibration sensor. To prevent particles from being deposited onto the surface 308 of the protective lid 306, the above-described air curtain 100 (FIG. 5) or pellicle 200 (FIG. 6) can be used.

The foregoing description of the present invention has been presented for purposes of illustration and description. It is not intended to be exhaustive or to limit the invention to the precise form disclosed, and many modifications and variations are possible in light of the above teaching. Such modifications and variations that may be apparent to a person skilled in the art are intended to be included within the scope of this invention.

## Claims

1. A method for reducing contamination on a protective lid (74) of a component of a grating light valve (GLV) system (64), comprising:
- surrounding the protective lid (74) of the GLV component (64) with a shroud (102); and
- inputting a stream of air into the shroud.

2. The method of claim 1, wherein the GLV component is selected from the group consisting of a GLV and a calibration sensor (300).

3. The method according to any one of the previous claims, wherein the shroud directs the stream of air away from the protective lid of the GLV component.

4. The method according to any one of the previous claims, further comprising:
- projecting laser light at the GLV component, wherein the shroud directs the stream of air in a direction (106) substantially parallel to an axis of the laser light projected at the GLV component.

5. The method according to any one of the previous claims, wherein the shroud prevents particles from being dragged in behind the stream of air.

6. The method according to any one of the previous claims, wherein the shroud prevents particles from reaching the protective lid of the GLV component.

7. The method according to any one of the previous claims, wherein inputting a stream of air into the shroud further comprises:
- introducing the stream of air immediately adjacent an interface between the shroud and the GLV component.

8. The method any one of the previous claims, wherein inputting a stream of air into the shroud further comprises:
- generating the stream of air using an air compressor (104); and
- supplying the stream of air from the air compressor into the shroud.

9. A method for reducing contamination on a protective lid of a grating light valve (GLV) component, comprising:
- directing a stream of air away from the protective lid of the GLV component, wherein the GLV component is selected from the group consisting of a GLV and a calibration sensor.

10. An apparatus for reducing contamination on a protective lid of a grating light valve (GLV) component using a method according to any one of the previous claims.

11. An imaging system comprising:
- a media support surface (28) for supporting a printing plate (18);
- a system (30) for recording image data onto the printing plate, wherein the system for recording includes a grating light valve (GLV) system; and
- a system for reducing contamination on a protective lid of a component of the GLV system that uses any one of the methods in claims 1 to 10.

12. The imaging system of claim 11, wherein the media support surface comprises an external drum (24).

13. A method for reducing contamination on a protective lid of a component of a grating light valve (GLV) system, comprising:
- enclosing the protective lid of the GLV component within a pellicle (200).

14. The method of claim 13, wherein the GLV component is selected from the group consisting of a GLV and a calibration sensor.

15. The method of claim any one of the claims 13 to 14, further comprising:
- replacing the pellicle when a membrane (202) of the pellicle becomes sufficiently contaminated.

16. An apparatus for reducing contamination on a protective lid of a component of a grating light valve (GLV) system that uses any one of the methods in claims 13 to 15.

17. The apparatus of claim 16, wherein the pellicle further comprises:
- a membrane;
- a frame (204) for positioning the membrane over the protective lid of the GLV component; and
- an adhesive layer (206) for removably securing the frame over the GLV component.

18. An imaging system (10) comprising:
- a media support surface for supporting a printing plate;
- a system for recording image data onto the printing plate, wherein the system for recording includes a grating light valve (GLV) system; and
- a system for reducing contamination on a protective lid of a component of the GLV system that uses any one of the methods in claims 13 to 15.

19. The imaging system of claim 18, wherein the media support surface comprises an external drum.
